# EUROPEAN PATENT SPECIFICATION

(11) **EP 4 246 651 B1**
(45) Date of publication and mention of the grant of the patent: **27.05.2026**
(21) Application number: 22857440.6
(22) Date of filing: 29.06.2022
(51) Int. Cl.: H01M 10/0587, H01M 50/474, H01M 10/04, H01M 50/209, H01M 50/103, H01M 10/052

(54) **ELECTRODE ASSEMBLY, BATTERY CELL, BATTERY, AND ELECTRIC DEVICE**
ELEKTRODENANORDNUNG, BATTERIEZELLE, BATTERIE UND ELEKTRISCHE VORRICHTUNG
ENSEMBLE ÉLECTRODE, CELLULE DE BATTERIE, BATTERIE ET DISPOSITIF ÉLECTRIQUE

(30) Priority: 19.08.2021 CN 202121958755 U
(43) Date of publication of application: 20.09.2023
(73) Proprietor: Contemporary Amperex Technology (Hong Kong) Limited, Central, Central And Western District (HK)
(72) Inventor: WANG, Xitong, Ningde, Fujian 352100 (CN); TANG, Daichun, Ningde, Fujian 352100 (CN); DU, Xinxin, Ningde, Fujian 352100 (CN); YU, Honggang, Ningde, Fujian 352100 (CN)
(74) Representative: Gong, Jinping
(86) International application number: PCT/CN2022/102462
(87) International publication number: WO 2023/020127

(56) References cited:
- CN-A- 101 409 363
- CN-A- 102 222 802
- CN-A- 109 473 729
- CN-A- 110 959 220
- CN-A- 111 886 726
- CN-A- 112 768 623
- CN-U- 209 401 752
- CN-U- 209 401 752
- CN-U- 215 896 624
- JP-A- 2016 100 270
- US-A1- 2020 144 674

## Description

### TECHNICAL FIELD

This application relates to the field of battery technologies, and specifically to an electrode assembly, a battery cell, a battery, and an electric device.

### BACKGROUND

Batteries are widely used in the new energy field, such as electric vehicles and new energy vehicles. New energy vehicles and electric vehicles have become a new trend in the development of the automobile industry. The safety and service life of batteries are very important for electric devices, and therefore, how the safety and cycle life of batteries are improved is an important research direction in the field of battery technologies.
CN209401752U , forming the basis for the preamble of claim 1, describes an electrode assembly comprising an insulating layer
CN112768623A describes a battery and a battery cell.
US2020144674A describes an electrochemical device comprising a cell comprising an insulating layer.
CN102222802A relates to a method for manufacturing a lithium ion battery.

### SUMMARY

This application is intended to provide an electrode assembly, a battery cell, a battery, and an electric device, so as to improve safety and cycle life of the battery. The present invention is defined in the claims.

Embodiments of this application are implemented as follows.

According to a first aspect, an embodiment of this application provides an electrode assembly, including:

a first electrode plate, a second electrode plate, and a first insulation layer, the first electrode plate and the second electrode plate being wound to form the electrode assembly, where a winding terminating end of the first electrode plate exceeds a winding terminating end of the second electrode plate by at least half a turn so that the first electrode plate entirely covers an outer surface of an outermost turn of the second electrode plate, and the first insulation layer being applied on an outer surface of an outermost turn of the first electrode plate.

An outermost layer of the electrode assembly provided in this application is the first electrode plate, and the terminating end of the first electrode plate is set to exceed the second electrode plate by at least half a turn, so as to prevent the first electrode plate from loosening at a terminating position to cause the second electrode plate to be exposed, thereby preventing lithium precipitation, improving the cycle life of the battery, and preventing the first electrode plate and the exposed second electrode plate from contacting the battery housing at the same time to cause a short circuit, thereby improving the safety of the battery; and the first insulation layer is provided on a surface of the outermost turn of the first electrode plate to prevent the first electrode plate from contacting the battery housing, so that a safety risk and a short circuit risk caused by a charged battery housing are further avoided, and the safety of the battery is improved.

In an embodiment of this application, the first insulation layer extends from the winding terminating end of the first electrode plate by at least half a turn.

In the foregoing technical solution, the first insulation layer surrounds the outermost layer of the electrode assembly (that is, a periphery of the electrode assembly) by at least half a turn, and two electrode assemblies may be combined, such that portions of the two electrode assemblies that are not provided with the insulation layer are attached, the first insulation layers of the two electrode assemblies together form an insulation closed loop, and when the two electrode assemblies are combined and placed in the battery housing, the electrode assemblies can be ensured to be insulated and isolated from the battery housing, thereby improving the safety of the battery.

In an embodiment of this application, the electrode assembly has a straight flat zone, a first bending zone, and a second bending zone, where the straight flat zone is located between the first bending zone and the second bending zone, and the winding terminating end of the first electrode plate is located in the first bending zone.

The straight flat zone of the electrode assembly is a position where a large surface is located, the electrode assembly expands mainly on the large surface, the large surface easily comes in contact with the housing, and in the foregoing technical solution, the large surface entirely covers the insulation layer, so that the short circuit risk caused by the large surface being overlapped with the housing can be effectively prevented.

In an embodiment of this application, the first bending zone has a first vertex farthest away from a winding center of the electrode assembly, the second bending zone has a second vertex farthest away from the winding center of the electrode assembly, and the first insulation layer covers the first vertex and the second vertex.

In the foregoing technical solution, the first insulation layer not only surrounds the electrode assembly by at least half a turn, but also covers the first vertex and the second vertex, so that the first insulation layer can not only insulate and isolate the large surface of the electrode assembly from the battery housing, but also can insulate and isolate two ends of the electrode assembly from the battery housing, so as to ensure that positions where the electrode assembly and the battery housing easily come in contact with each other are all provided with the first insulation layer.

In an embodiment of this application, the first insulation layer extends from the winding terminating end of the first electrode plate by at least one turn.

In the foregoing technical solution, no matter by how many turns of the first electrode plate exceeding the second electrode plate, the first insulation layer surrounds the periphery of the electrode assembly by at least one turn, ensuring that the periphery of the electrode assembly is entirely covered by the first insulation layer, and guaranteeing the insulation effect.

In an embodiment of this application, the first insulation layer is applied only on a portion of the first electrode plate exceeding the winding terminating end of the second electrode plate.

In the foregoing technical solution, the first insulation layer is applied only on the portion of the first electrode plate exceeding the winding terminating end of the second electrode plate, so that the first insulation layer is prevented from interfering with lithium ion transfer, preventing the lithium precipitation.

In an embodiment of this application, an inner surface of the portion of the first electrode plate exceeding the winding terminating end of the second electrode plate is coated with a second insulation layer.

In the foregoing technical solution, the first insulating layer is provided on the periphery of the electrode assembly, and the inner surface of the portion of the first electrode plate exceeding the winding terminating end of the second electrode plate is provided with the second insulation layer, so that not only lithium ion transfer is not interfered which otherwise causes lithium precipitation, but also thickness of the insulation layer can be increased, thereby achieving a better insulation effect.

In an embodiment of this application, the inner surface or an outer surface of the portion of the first electrode plate exceeding the winding terminating end of the second electrode plate is coated with a flame retardant layer and/or a getter layer.

In the foregoing technical solution, the portion of the first electrode plate exceeding the second electrode plate may be further coated with another material, so as to retard flame or absorb gas, thereby further improving safety.

In an embodiment of this application, the electrode assembly further includes a separator, where the separator is disposed between the first electrode plate and the second electrode plate, and a winding terminating end of the separator exceeds the winding terminating end of the first electrode plate by at least 1.75 turns.

In the foregoing technical solution, the separator further tightly wraps the first electrode plate and the second electrode plate outside the electrode assembly so as to increase binding force, so that the winding terminating end of the first electrode plate is better attached to the first electrode plate of a second outermost turn, which effectively relieves a problem of an increased gap between the first electrode plate and the second electrode plate caused by the winding terminating end of the first electrode plate and the winding terminating end of the second electrode plate being loosened, thereby preventing the lithium precipitation caused by the increased gap, and effectively improving the safety.

According to a second aspect, an embodiment of this application provides a battery cell, including a housing and at least one electrode assembly as described above, where the electrode assembly is disposed in the housing.

According to a third aspect, an embodiment of this application provides a battery, including the foregoing battery cell.

According to a fourth aspect, an embodiment of this application provides an electric device, including the foregoing battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic exploded view of a battery according to an embodiment of this application;
FIG. 3 is a schematic exploded view of a battery cell according to an embodiment of this application;
FIG. 4 is a schematic planar diagram of winding of an electrode assembly according to an embodiment of this application;
FIG. 5 is a schematic planar diagram of winding of an electrode assembly according to another embodiment of this application;
FIG. 6 is a schematic structural diagram of a combination of two electrode assemblies according to an embodiment of this application;
FIG. 7 is a schematic structural diagram of a combination of three electrode assemblies according to an embodiment of this application;
FIG. 8 is a schematic structural diagram of a combination of three electrode assemblies according to another embodiment of this application;
FIG. 9 is a schematic planar diagram of winding of an electrode assembly according to still another embodiment of this application;
FIG. 10 is a schematic planar diagram of winding of a rectangular electrode assembly according to an embodiment of this application;
FIG. 11 is a schematic planar diagram of winding of a rectangular electrode assembly according to another embodiment of this application;
FIG. 12 is a schematic structural diagram of a combination of two electrode assemblies according to another embodiment of this application;
FIG. 13 is a schematic planar diagram of winding of a rectangular electrode assembly according to still another embodiment of this application;
FIG. 14 is a schematic structural diagram of a first insulation layer of a rectangular electrode assembly surrounding by one turn according to an embodiment of this application;
FIG. 15 is a schematic structural diagram of a first insulation layer of a cylindrical electrode assembly surrounding by one turn according to an embodiment of this application;
FIG. 16 is a schematic structural diagram of a second insulation layer according to an embodiment of this application; and
FIG. 17 is a stereoscopic schematic diagram of a combination of two rectangular electrode assemblies according to an embodiment of this application.

In the accompanying drawings, the figures are not drawn to scale.

Reference signs: 100. battery; 101. box; 1011. first portion; 1012. second portion; 1. battery cell; 11. housing; 111. opening; 12. electrode assembly; 12a. straight flat zone; 12b. first bending zone; 12c. second bending zone; 121. first electrode plate; 1211. first tab; 122. second electrode plate; 1221. second tab; 123. first insulation layer; 124. second insulation layer; 125. separator; 13. end cover assembly; 131. cover plate; 132. first electrode terminal; 133. second electrode terminal; 200. motor; 300. controller; and 1000. vehicle.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the description, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this description, reference to "embodiment" means that specific features, structures or characteristics described with reference to the embodiment may be incorporated in at least one embodiment of this application. The word "embodiment" appearing in various places in the description does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this description generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing higher voltage and capacity. For example, the battery mentioned in this application may include a battery module, a battery pack, or the like. A battery typically includes a box configured to enclose one or more battery cells. The box can prevent liquids or other foreign matters from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. In order to guarantee that no fusing occurs when a large current passes, there are a plurality of positive tabs that are stacked together, and there are a plurality of negative tabs that are stacked together. The separator may be made of PP (polypropylene, polypropylene), PE (polyethylene, polyethylene), or the like.

The separator features electronic insulation and is used to separate the positive electrode plate and the negative electrode plate that are adjacent, so as to prevent a short circuit of the positive electrode plate and the negative electrode plate that are adjacent. The separator has a large quantity of penetrating micropores, and therefore, can ensure free passage of electrolyte ions and has good permeability performance for lithium ions. Therefore, the separator basically cannot block passage of lithium ions.

The battery cell further includes a housing having an opening and a cover plate for closing the opening, and the housing is configured to accommodate the electrode assembly.

For the development of battery technology, many design factors need to be considered, for example, performance parameters such as energy density, cycle life, discharge capacity, and charge and discharge rate, as well as safety of the battery. Insulation between the electrode assembly and the housing of the battery cell is one of the important factors affecting the safety performance of the battery. When the housing of the battery cell contacts the electrode assembly, the housing of the battery cell is charged, which leads to a large short circuit risk and causes potential safety hazards.

To resolve the problem of short circuit, in the prior art, a polyester film (mylar film) is typically provided outside the electrode assembly for isolating the electrode assembly from the housing so as to achieve the purpose of insulation. However, with the mylar film provided, insulation failure is still sometimes present, and sometimes lithium precipitation is also present. The inventors have found through research that the electrode assembly experiences swelling and contraction during charge and discharge, the mylar film swells as the electrode assembly swells, and the mylar film does not contracts as the electrode assembly contracts, causing an increased gap between the electrode assembly and the mylar film, so that granular impurities in the battery cell (for example, welding slags generated when the housing of the battery cell and the cover plate are welded, and metal particles generated during reworking, rasping, and the like) can easily enter the increased gap. When the electrode assembly is charged and experiences swelling next time, the granular impurities act on the electrode plate and the mylar film, so that the electrode plate and the mylar film are deformed and damaged due to an excessively large local stress, and a damaged mylar film easily causes insulation failure, thereby resulting in potential safety hazards.

In addition, during charge of the lithium-ion battery cell, lithium ions are deintercalated from the positive electrode plate and intercalated into the negative electrode plate. The following may occur: insufficient space for lithium intercalation in the negative electrode plate, an excessively large distance between the negative electrode plate and the positive electrode plate, excessively large resistance for intercalation of lithium ions into the negative electrode plate, excessively rapid deintercalation of lithium ions from the positive electrode plate, inability of intercalating deintercalated lithium ions into the negative electrode active substance layer of the negative electrode plate in the same amount, or lithium ions that cannot be intercalated into the negative electrode plate obtaining electrons only on a surface of the negative electrode plate. Consequently, a silver-white metallic lithium element is formed, which is referred to as lithium precipitation. Moreover, electrode plate deformation may lead to excessively large distance between the negative electrode plate and the positive electrode plate, so that the electrode plate deformation further easily causes the lithium precipitation.

The lithium precipitation not only degrades performance of the lithium-ion battery cell and greatly shortens the cycle life, but also limits a fast charging capacity of the lithium-ion battery cell. In addition, when lithium precipitation occurs in the lithium-ion battery, resulting lithium metal is so active to react with the electrolyte at a lower temperature, causing a lower self-heating start temperature and a higher self-heating rate of the battery cell, and therefore severely affecting the safety of the battery cell. Furthermore, in case of severe lithium precipitation, deintercalated lithium ions may form lithium crystals on the surface of the negative electrode plate, and the lithium crystals are prone to pierce the separator, causing a risk of short circuit to the positive electrode plate and the negative electrode plate that are adjacent.

In view of this, the inventors of this application provide a solution for resolving the problems of insulation failure and lithium precipitation. In this solution, the winding terminating end of the first electrode plate exceeds the winding terminating end of the second electrode plate by at least half a turn so that the first electrode plate entirely covers an outer surface of an outermost turn of the second electrode plate, and the first insulation layer being applied on an outer surface of an outermost turn of the first electrode plate.

In this solution, the mylar film is omitted. Therefore, during charge and discharge of the electrode assembly, that a peripheral surface of the electrode assembly and the mylar film fit to clamp particles is avoided, so that the electrode plate is not deformed or pierced by the reaction force of the particles around the periphery of the electrode assembly, and the problems of lithium precipitation and insulation failure caused by the mylar film not contracting synchronously are also avoided.

The first insulation layer is provided on the outer surface of the electrode plate at the outermost layer of the electrode assembly, so that the first insulation layer masks a portion of the electrode assembly that easily comes in contact with the housing, so as to prevent the portion from contacting the housing, to alleviate a risk of a short circuit in a case that the housing is charged, thereby improving safety.

In addition, the winding terminating end of the first electrode plate exceeds the winding terminating end of the second electrode plate by at least half a turn so that the first electrode plate is used to entirely cover and wrap the second electrode plate, so as to prevent the winding terminating end of the first electrode plate and the winding terminating end of the second electrode plate from loosening, avoid a problem that the winding terminating end of the second electrode plate is exposed, and further avoid a short circuit caused by the first electrode plate and the exposed second electrode plate that contact the battery housing at the same time, thereby further improving the safety. In addition, lithium precipitation caused by sufficient lithium intercalation space resulted from the partially exposed second electrode plate is avoided.

The first electrode plate is used to tightly wrap the second electrode plate, which can further relieve the gap increase between the winding terminating end of the second electrode plate and the first electrode plate caused by looseness thereof, so as to avoid the lithium precipitation caused by the excessively large distance between the negative electrode plate and the positive electrode plate; and the particles are prevented from entering between the first electrode plate and the second electrode plate, which prevents the particles from damaging the electrode plate and the separator during next swelling of the electrode plate, and further avoids the lithium precipitation and the short circuit caused by the damage.

The battery cell disclosed in the embodiments of this application may be used without limitation in electric apparatuses such as vehicles, ships, or aircrafts. The battery cell, the battery, and the like disclosed in this application may be used to constitute a power supply system of the electric apparatus. This helps relieve and automatically adjust deterioration in the swelling force of the cell, compensate for electrolyte consumption, and improve stability of the performance and service life of the battery.

An embodiment of this application provides an electric device that uses a battery as the power supply. The electric device may be but is not limited to a mobile phone, a tablet, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

It should be understood that the technical solutions described in the embodiments of this application are not only applicable to the devices described above, but also applicable to all devices using batteries. However, for brevity of description, in the following embodiments, the electric vehicle is used as an example for description.

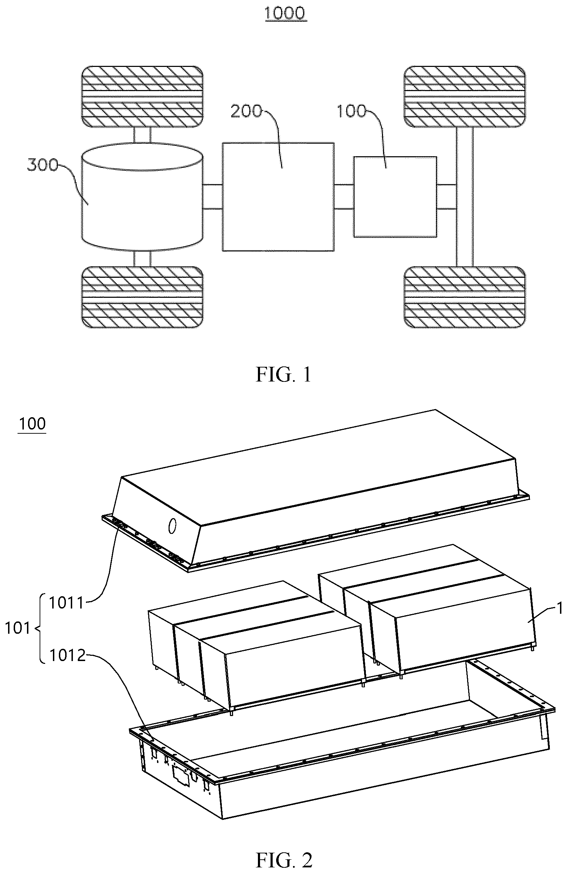

For example, FIG. 1 shows a vehicle 1000 according to an embodiment of this application. The vehicle 1000 may be a fuel vehicle, a gas vehicle, or a new energy vehicle, and the new energy vehicle may be a battery electric vehicle, a hybrid electric vehicle, an extended range electric vehicle, or the like. A battery 100, a controller 300, and a motor 200 may be disposed inside the vehicle 1000, and the controller 300 is configured to control the battery 100 to supply power to the motor 200. For example, the battery 100 may be disposed at the bottom, front, or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of this application, the battery 100 can be used not only as the operational power source for the vehicle 1000, but also as a driving power source for the vehicle 1000, replacing or partially replacing fossil fuel or natural gas to provide driving traction for the vehicle 1000.

To meet different power usage requirements, the battery 100 may include a plurality of battery cells, where the plurality of battery cells may be connected in series, parallel, or series and parallel, and being connected in series and parallel refers to a combination of series and parallel connections. The battery 100 may also be called a battery pack. Optionally, as shown in FIG. 2, a plurality of battery cells 1 may be connected in series, parallel, or series and parallel to form a battery module first, and then a plurality of battery modules are connected in series, parallel, or series and parallel to form a battery 100. In other words, the plurality of battery cells 1 may be directly combined into the battery 100, or may first be combined into battery modules which are then combined into the battery 100.

The battery 100 may include a plurality of battery cells 1. The battery 100 may further include a box 101 (or referred to as a cover), an inside of the box 101 is of a hollow structure, and the plurality of battery cells 1 are accommodated in the box 101. The box 101 may include two portions for accommodation (as shown in FIG. 2), which are herein referred to as a first portion 1011 and a second portion 1012 respectively, and the first part 1011 and the second part 1012 are snap-fitted together. Shapes of the first portion 1011 and the second portion 1012 may be determined according to a shape of a combined plurality of battery cells 1. Each of the first portion 1011 and the second portion 1012 may have an opening. For example, the first portion 1011 and the second portion 1012 each may be a hollow cuboid and have only one face with an opening, the opening of the first portion 1011 is disposed opposite the opening of the second portion 1012, and the first portion 1011 and the second portion 1012 are snap-fitted to form the box 101 with an enclosed chamber. Alternatively, one of the first portion 1011 and the second portion 1012 may be a cuboid with an opening, and the other of the first portion 1011 and the second portion 1012 may be a cover plate structure to close the opening of the cuboid. The plurality of battery cells 1 are connected in series, parallel, or series and parallel and then placed into the box 101 formed after the first portion 1011 and the second portion 1012 are snap-fitted.

Optionally, the battery 100 may also include other structures. For example, the battery 100 may also include a busbar that is used to implement electrical connection between the plurality of battery cells 1, for example, in parallel, in series, or in series and parallel. Specifically, the busbar may enable the electrical connection between the battery cells 1 by connecting the electrode terminals of the battery cells 1. Further, the busbar may be fixed to the electrode terminals of battery cells 1 by welding. Electrical energy of the plurality of battery cells 1 may be further led out by a conductive mechanism that passes through the box 101. Optionally, the conductive mechanism may also belong to the busbar.

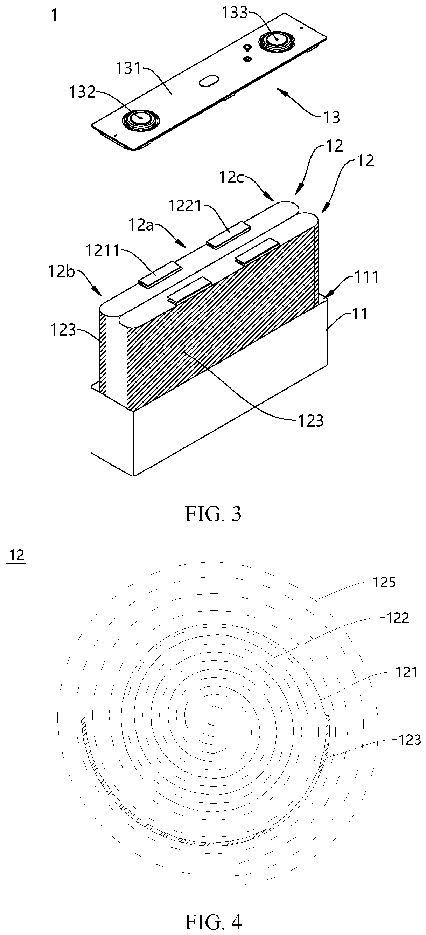

The following describes in detail with respect to any one of the battery cells 1. FIG. 3 shows a battery cell 1 according to an embodiment of this application, and the battery cell 1 includes a housing 11, an end cover assembly 13, an electrode assembly 12, and other functional components.

The housing 11 is determined based on a shape of the electrode assembly 12. For example, the housing 11 may be a hollow cuboid, a cube, or a cylinder, and one surface of the housing 11 has an opening 111 for placing the one or more electrode assemblies 12 into the housing 11. For example, when the housing 11 is a hollow cuboid or a cube, one plane of the housing 11 is a plane with an opening 111, and the plane is configured to have no wall so that inside and outside of the housing 11 are communicated.

The electrode assembly 12 is a component in which electrochemical reactions occur in the battery cell 1. The housing 11 may include one or more electrode assemblies 12. The electrode assembly 12 is mainly formed by winding or stacking a positive electrode plate and a negative electrode plate, and a separator 125 is generally provided between the positive electrode plate and the negative electrode plate. Parts of the positive electrode plate and the negative electrode plate having active substances constitute a main body of the electrode assembly 12, while parts of the positive electrode plate and the negative electrode plate having no active substances each constitute a tab. A positive tab and a negative tab may both be located at one end of the body portion or be located at two ends of the body portion respectively. During charge and discharge of the battery, a positive electrode active substance and a negative electrode active substance react with an electrolyte. An electrode terminal is provided in a quantity of two, an adapting piece is also provided in a quantity of two, the positive tab is connected to one electrode terminal via one adapting piece, and the negative tab is connected to the other electrode terminal via the other adapting piece.

The end cover assembly 13 is configured to cover the opening 111 and is connected to the housing 11 to form an enclosed cavity for placing the electrode assembly 12, and the enclosed cavity is isolated from an external environment and is used for accommodating the electrode assembly 12, the electrolyte (for example, a liquid electrolyte), and the like. The end cover assembly 13 includes a cover plate 131, and the cover plate 131 is configured to close the opening 111 and is connected to the housing 11. The end cover assembly 13 further includes a first electrode terminal 132 and a second electrode terminal 133, and the first electrode terminal 132 and the second electrode terminal 133 may be disposed on the cover plate 131. The cover plate 131 is generally a flat plate structure, the first electrode terminal 132 and the second electrode terminal 133 are fastened on a flat plate surface of the cover plate 131, and the first electrode terminal 132 and the second electrode terminal 133 are configured to be electrically connected to the electrode assembly 12.

According to some embodiments of this application, the electrode assembly 12 provided in this application may be of a cylindrical shape, or may also be of other shapes such as a flat shape. Referring to FIG. 4, FIG. 4 is a schematic planar diagram of winding of a cylindrical electrode assembly 12 according to an embodiment of this application. The electrode assembly 12 includes a first electrode plate 121, a second electrode plate 122, and a first insulation layer 123, the first electrode plate 121 and the second electrode plate 122 being wound to form the electrode assembly 12, where a winding terminating end of the first electrode plate 121 exceeds a winding terminating end of the second electrode plate 122 by at least half a turn so that the first electrode plate 121 entirely covers an outer surface of an outermost turn of the second electrode plate 122, and the first insulation layer 123 being applied on an outer surface of an outermost turn of the first electrode plate 121.

For the electrode assembly 12 of this application, the first electrode plate 121 and the second electrode plate 122 have opposite polarities. In this embodiment of this application, the first electrode plate 121 may be a negative electrode plate, and the second electrode plate 122 may be a positive electrode plate. The first electrode plate 121 and the second electrode plate 122 are wound and formed after being stacked, where the first electrode plate 121 is provided with a first tab 1211, the second electrode plate 122 is provided with a second tab 1221 (as shown in FIG. 3), the first tab 1211 is configured to connect a first electrode terminal 132, and the second tab 1221 is configured to connect a second electrode terminal 133. According to this application, one turn refers to as, from a point of the electrode assembly 12 as a starting point, to another point in the winding direction by a turn, the connecting line between the another point and the starting point in the radial direction of the electrode assembly 12. According to this application, half a turn refers to half of one turn, and 0.75 turns refers to 0.75 of one turn, and persons skilled in the art should understand the meaning of other turns, which is not detailed herein.

The winding terminating end of the first electrode plate 121 exceeds the winding terminating end of the second electrode plate 122 by at least half a turn, that is, after the second electrode plate 122 completes winding, the first electrode plate 121 continues to be wound until entirely covering the second electrode plate 122, and after the first electrode plate 121 entirely covers the second electrode plate 122, the first electrode plate 121 still continues to be wound by half a turn and then completes winding. In this case, the outermost layer of the electrode assembly 12 is the first electrode plate 121, the first electrode plate 121 exceeds the winding terminating end of the second electrode plate 122, and both the outermost layer and a second outermost layer of the electrode assembly 12 are the first electrode plate 121.

In this way, the first electrode plate 121 can be used to tightly wrap the second electrode plate 122, so as to prevent the winding terminating end of the second electrode plate 122 from being exposed outside the electrode assembly 12 due to loosening of the winding terminating end of the first electrode plate 121 and the winding terminating end of the second electrode plate 122. An extended winding terminating end of the first electrode plate 121 can ensure that the second electrode plate 122 is always within a coverage range of the first electrode plate 121, so that a periphery of the electrode assembly 12 facing the housing 11 is ensured to be the first electrode plate 121, avoiding a short circuit caused by the first electrode plate 121 and the exposed second electrode plate 122 contacting the housing 11 of the battery 100 at the same time.

The second electrode plate 122 being always within the coverage range of the first electrode plate 121 also avoids insufficient lithium intercalation space caused by the exposed portion of the second electrode plate 122 lacking a corresponding first electrode plate 121, thereby avoiding the lithium precipitation. The extension of the terminating end of the first electrode plate 121 also increases binding force, alleviating an increased gap between the first electrode plate 121 and the second electrode plate 122 caused by loosening of the terminating end of the first electrode plate 121, and avoiding the lithium precipitation. In this way, the short circuit caused by the electrode plate being damaged by the lithium precipitation is avoided, and the cycle life and safety of the battery 100 are ensured.

The first insulation layer 123 is provided on the periphery of the electrode assembly 12 which may come in contact with the housing 11, that is, when provided on the outer surface of the first electrode plate 121 on the outermost layer of the electrode assembly 12, the first insulation layer 123 masks a portion of the electrode assembly 12 that easily comes in contact with the housing 11, thereby insulating and isolating the electrode assembly 12 and the housing 11, and improving the safety of the battery 100.

There are a plurality of settings for a coverage portion and the coverage range of the first insulation layer 123 according to this application.

According to an embodiment of this application, the first insulation layer 123 extends from the winding terminating end of the first electrode plate 121 by at least half a turn.

As shown in FIG. 4, the winding terminating end of the first electrode plate 121 exceeds the winding terminating end of the second electrode plate 122 by at least half a turn, and the first insulation layer 123 is applied on a portion of the first electrode plate 121 exceeding the second electrode plate 122, that is, the first insulation layer 123 starts to extend from the winding terminating end of the first electrode plate 121 by half a turn in a direction opposite to a winding direction of the electrode plate.

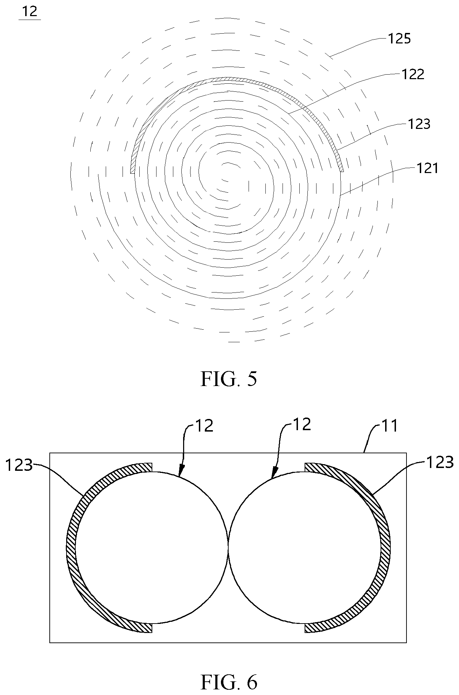

In some embodiments, the first insulation layer 123 may alternatively extend in the winding direction of the electrode plate and extend from the winding terminating end of the first electrode plate 121 by half a turn. As shown in FIG. 5, FIG. 5 is a schematic planar diagram of winding of the electrode assembly 12 according to another embodiment of this application, where the first insulation layer 123 is located at a portion of the first electrode plate 121 not exceeding the second electrode plate 122.

In some embodiments, alternatively, one portion of the first insulation layer 123 is located at a portion of the first electrode plate 121 exceeding the second electrode plate 122, and the other portion of the first insulation layer 123 is located at a portion of the first electrode plate 121 not exceeding the second electrode plate 122.

FIG. 6 shows a combination of two electrode assemblies 12, where outer peripheral surfaces of the two electrode assemblies 12 not provided with the first insulation layer 123 are close to or in contact with each other, such that outer peripheral surfaces of the two electrode assemblies 12 provided with the first insulation layer 123 face an inner wall of the housing 11, so that any part of the electrode assembly 12 facing the housing 11 is ensured to be masked by the first insulation layer 123, and the two electrode assemblies 12 are combined to form an insulation closed loop, thereby effectively preventing a short circuit and improving safety.

In some embodiments, three or more electrode assemblies 12 may alternatively be combined and then placed into the housing 11.

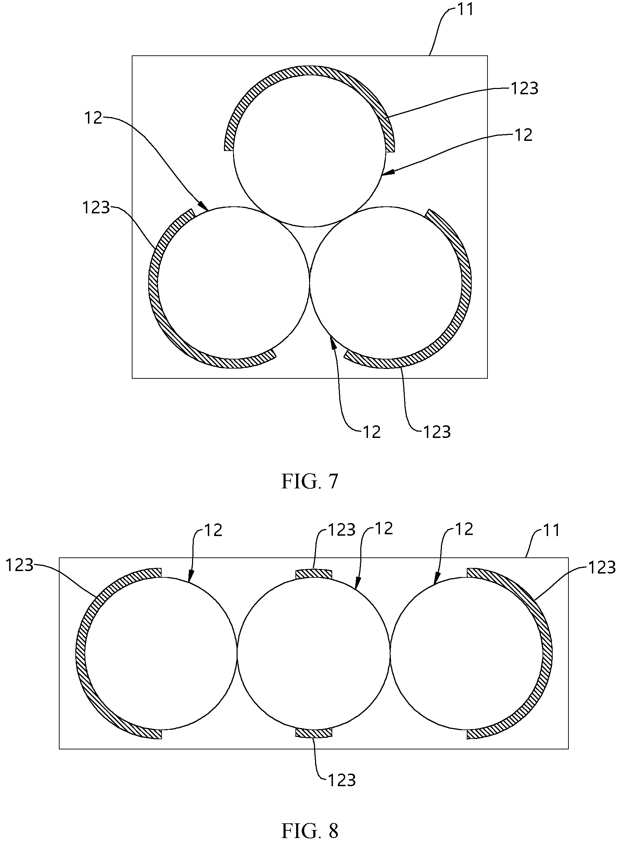

FIG. 7 shows a combination of three electrode assemblies 12. As shown in FIG. 7, the three electrode assemblies 12 are arranged in a triangular shape, a half-turn of first insulation layer 123 is provided on a surface of the first electrode plate 121 on the outermost layer of each electrode assembly 12, and an outer peripheral surface of each electrode assembly 12 not provided with the first insulation layer 123 is opposite each other, so that outer peripheral surfaces of the two electrode assemblies 12 provided with the first insulation layer 123 face the inner wall of the housing 11, thereby forming an insulation closed loop.

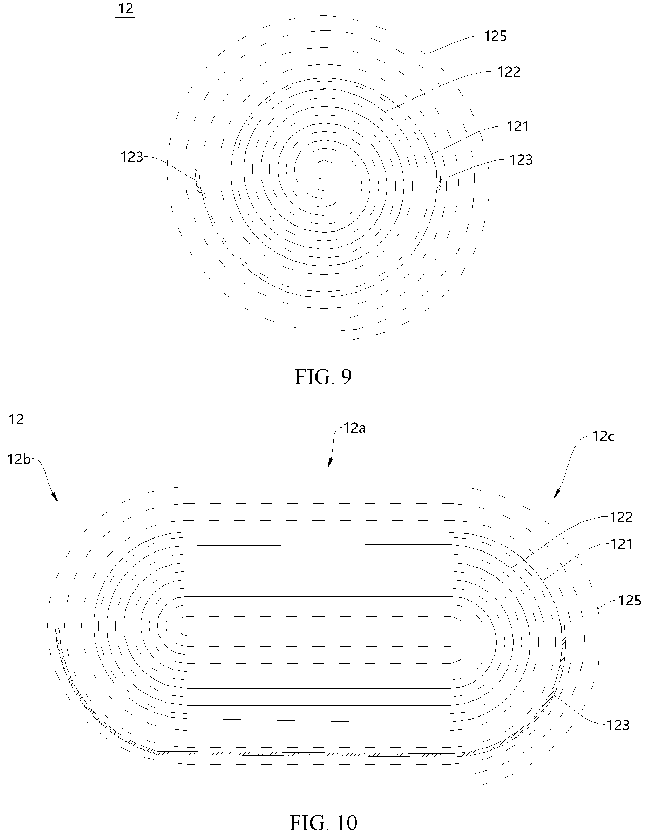

FIG. 8 shows another combination of three electrode assemblies 12. As shown in FIG. 8, the three electrode assemblies 12 are sequentially arranged, a half-turn of first insulation layer 123 is provided on the surface of the first electrode plate 121 at the outermost layer of the electrode assembly 12 at two ends, the first insulation layer 123 is provided at the vertex of the two ends perpendicular to an arrangement direction of the electrode assembly 12 located in the middle, and the winding structure of the electrode assembly 12 located in the middle is shown in FIG. 9. In the three electrode assemblies 12, an outer peripheral surface of each electrode assembly 12 not provided with the first insulation layer 123 faces an adjacent electrode assembly 12, and an outer peripheral surface of each electrode assembly 12 provided with the first insulation layer 123 faces the housing 11, thereby forming an insulation closed loop.

According to some embodiments, the electrode assembly 12 has a straight flat zone 12a, a first bending zone 12b, and a second bending zone 12c, where the straight flat zone 12a is located between the first bending zone 12b and the second bending zone 12c, the winding terminating end of the first electrode plate 121 is located in the first bending zone 12b, and the first insulation layer 123 extends from the winding terminating end of the first electrode plate 121 by at least half a turn.

As shown in FIG. 10, FIG. 10 is a structural diagram of winding of an electrode assembly according to an embodiment of this application, where the electrode assembly 12 is flat. The electrode assembly 12 may be directly wound into a flat shape, or may be wound into a circle or an oval, and then a middle portion of the electrode assembly 12 is pressed and compacted, so that a straight flat zone 12a is formed in the middle of the electrode assembly 12, and two ends of the straight flat zone 12a are bending zones (that is, a first bending zone 12b and a second bending zone 12c). The straight flat zone 12a has two opposite surfaces, and the first bending zone 12b and the second bending zone 12c each have an arc-shaped surface. Relatively speaking, any surface of the straight flat zone 12a is greater than the arc-shaped surface of the first bending zone 12b or the second bending zone 12c, and any surface of the straight flat zone 12a is typically referred to as a large surface.

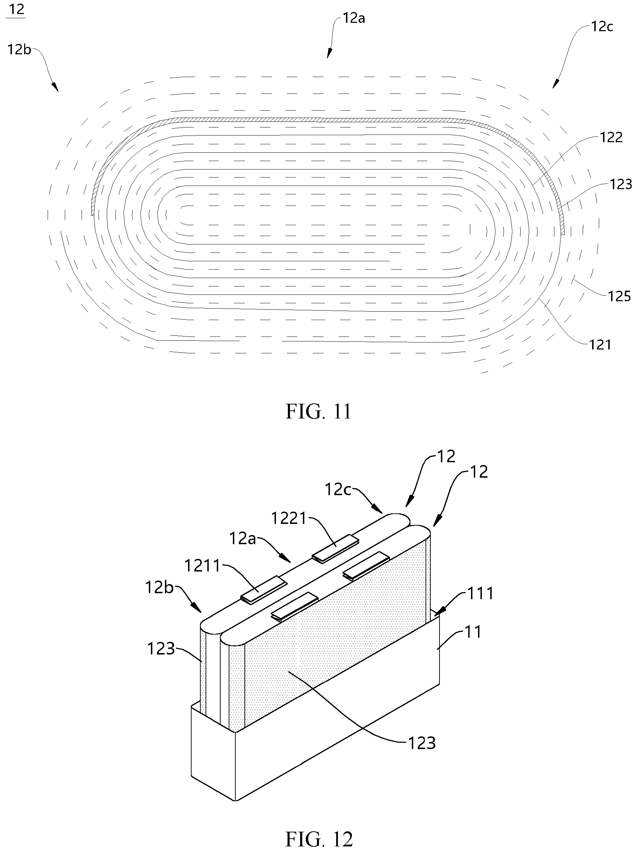

The winding terminating end of the first electrode plate 121 is located in the first bending zone 12b, the first insulation layer 123 extends from the winding terminating end of the first electrode plate 121 by at least half a turn, and an extension direction of the first insulation layer 123 may be a winding direction of the electrode assembly 12, or may be opposite to the winding direction of the electrode assembly 12. As shown in FIG. 10, the first insulation layer 123 extends from the winding terminating end of the first electrode plate 121 in a direction opposite to the winding direction of the electrode plate by half a turn, and the first insulation layer 123 is applied on a portion of the first electrode plate 121 exceeding the second electrode plate 122. As shown in FIG. 11, the first insulation layer 123 extends from the winding terminating end of the first electrode plate 121 in the winding direction of the electrode plate by half a turn, and the first insulation layer 123 is located on a portion of the first electrode plate 121 not exceeding the second electrode plate 122.

In this way, a side surface of the straight flat zone 12a of the electrode assembly 12, that is, both a large surface on a side of the electrode assembly 12 and a portion adjacent to the large surface on the side have the first insulation layer 123. Generally, there is a gap between the electrode assembly 12 and the housing 11, and during charge and discharge when the electrode assembly 12 experiences swelling, the electrode assembly 12 experiences swelling mainly in the straight flat zone 12a (that is, a position where the large surface is located), so that the straight flat zone 12a easily comes in contact with the housing 11. The first insulation layer 123 is provided on the large surface on a side of the electrode assembly 12, effectively avoiding a risk of a short circuit caused by the large surface overlapping the housing 11.

FIG. 12 shows a combination of two electrode assemblies 12, where the two electrode assemblies 12 are flat, and outer peripheral surfaces of the two electrode assemblies 12 not provided with the first insulation layer 123 are close to or in contact with each other, such that outer peripheral surfaces of the two electrode assemblies 12 provided with the first insulation layer 123 face an inner wall of the housing 11, meaning that large surfaces on a side of the two electrode assemblies 12 not provided with the first insulation layer 123 are close to or in contact with each other, and large surfaces on a side of the two electrode assemblies 12 provided with the first insulation layer 123 face the housing 11, thereby ensuring that any part of the electrode assembly 12 facing the housing 11 is masked by the first insulation layer 123, and the two electrode assemblies 12 are combined to form an insulation closed loop, thereby effectively avoiding short circuit and improving safety.

According to some embodiments of this application, the first bending zone 12b has a first vertex farthest away from a winding center of the electrode assembly 12, the second bending zone 12c has a second vertex farthest away from the winding center of the electrode assembly, and the first insulation layer 123 covers the first vertex and the second vertex.

After the electrode assembly 12 is wound and formed and flattened into a flat shape, referring to FIG. 10 or FIG. 11, two vertexes (the first vertex and the second vertex) farthest away from the winding center are located at two ends of the flat shape, and after the electrode assembly 12 is placed into the housing, the first vertex and the second vertex of the electrode assembly 12 may come in contact with the housing 11 in addition to that the large surface easily comes in contact with the housing 11. The first insulation layer 123 is provided to cover the first vertex and the second vertex, effectively alleviating a short circuit caused by the first vertex and the second vertex coming in contact with the housing 11.

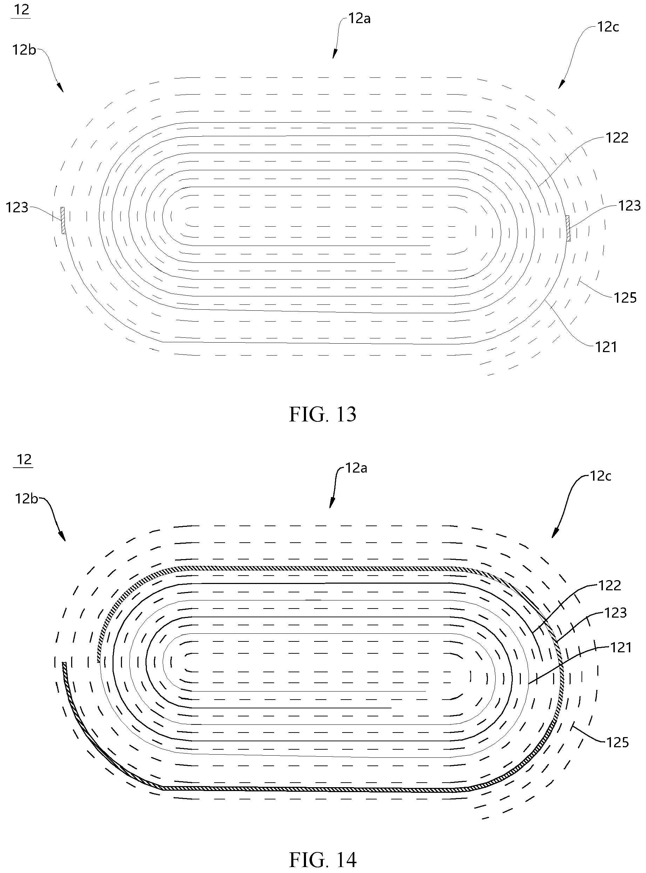

In some embodiments, when three or more electrode assemblies 12 are sequentially arranged and large surfaces thereof are attached to each other, the first insulation layer 123 is disposed on the large surfaces, that face the housing 11, of electrode assemblies 12 located at two ends in an arrangement direction, and the first insulation layer 123 extends from the first vertex to the second vertex, as shown in FIG. 10 or FIG. 11; and the electrode assembly 12 in the middle of the arrangement direction is only provided with the first insulation layer 123 at a position where the first vertex and the second vertex are located, as shown in FIG. 13. In this way, a portion of an entire combination of the three electrode assemblies 12 that may come in contact with the housing is entirely covered by the first insulation layer 123, so that an insulation closed loop is formed in a circumferential direction of the entire combination of the three electrode assemblies 12, thereby avoiding short circuit.

According to some embodiments of this application, the first insulation layer 123 extends from the winding terminating end of the first electrode plate 121 by at least one turn.

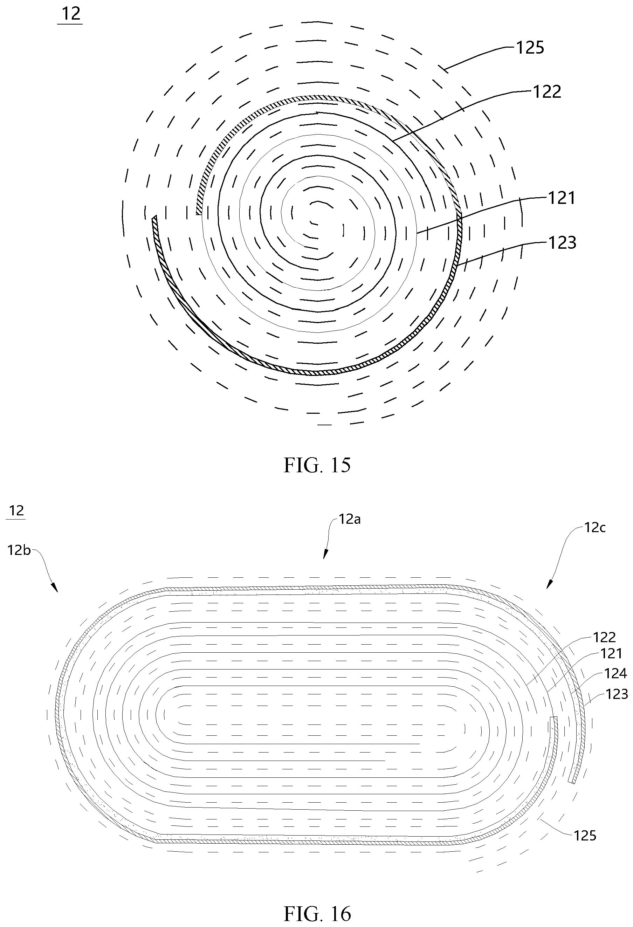

As shown in FIG. 14 and FIG. 15, the first insulation layer 123 takes the winding terminating end of the first electrode plate 121 as a starting point and surrounds the periphery of the electrode assembly 12 by one turn to ensure that the periphery of the electrode assembly 12 is entirely covered by the first insulation layer 123, and a single electrode assembly 12 forms an insulation closed loop, thereby ensuring that the electrode assembly 12 is insulated and isolated from the housing 11.

In some embodiments, after the first insulation layer 123 surrounds the periphery of the electrode assembly 12 by one turn, the first insulation layer 123 continues to extend for some length, so as to avoid a short circuit caused by a portion that is not provided with the first insulation layer 123 exposing a periphery and coming in contact with the housing 11 when the terminating end of the first electrode plate 121 is loosened.

According to some embodiments of this application, the first insulation layer 123 is applied only on a portion of the first electrode plate 121 exceeding the winding terminating end of the second electrode plate 122.

The portion of the first electrode plate 121 not exceeding the winding terminating end of the second electrode plate 122 needs to receive lithium ions, and the first insulation layer 123 is only applied on the portion of the first electrode plate 121 exceeding the winding terminating end of the second electrode plate 122, so as to prevent the first insulation layer 123 from affecting the first electrode plate 121 receiving lithium ions, and avoid the lithium precipitation.

For example, as shown in FIG. 4 and FIG. 10, the first electrode plate 121 exceeds the winding terminating end of the second electrode plate 122 by at least half a turn, the first insulation layer 123 starts to extend from the winding terminating end of the first electrode plate 121 by half a turn in a direction opposite to a winding direction of the electrode plate.

Certainly, in other embodiments, the first insulation layer 123 may not start to extend from the winding terminating end of the first electrode plate 121, but only from another position of the portion of the first electrode plate 121 exceeding the winding terminating end of the second electrode plate 122, and extends within a range of the portion of the first electrode plate 121 exceeding the winding terminating end of the second electrode plate 122. For example, as shown in FIG. 9 and FIG. 13, the first insulation layer 123 is provided at a local position of a portion of the first electrode plate 121 exceeding the winding terminating end of the second electrode plate 122.

According to some embodiments of this application, an inner surface of the portion of the first electrode plate 121 exceeding the winding terminating end of the second electrode plate 122 is coated with a second insulation layer 124.

As shown in FIG. 16, in addition to provision of the first insulation layer 123 on the outer surface of the outermost turn of the first electrode plate 121, an inner surface of the portion of the first electrode plate 121 exceeding the winding terminating end of the second electrode plate 122 is coated with a second insulation layer 124.

The portion of the first electrode plate 121 exceeding the winding terminating end of the second electrode plate 122 does not need to be used to receive lithium ions. Therefore, the second insulation layer 124 does not affect the lithium intercalation space of the first electrode plate 121, which does not lead to the lithium precipitation, and can also increase thickness of the insulation layer to achieve a better insulation effect. In addition, even if a sharp object pierces the housing 11 and punctures through the portion of the first electrode plate 121 exceeding the winding terminating end of the second electrode plate 122, the second insulation layer 124 can still isolate the second electrode plate 122 at the second outermost turn from the sharp object and the housing 11, thereby further achieving an insulation effect.

In some embodiments, as shown in FIG. 16, the first electrode plate 121 exceeds the winding terminating end of the second electrode plate 122 by at least one turn, both the first insulation layer 123 and the second insulation layer 124 are provided at the portion of the first electrode plate 121 exceeding the winding terminating end of the second electrode plate 122, and an extension length of the first insulation layer 123 is at least one turn, and an extension length of the second insulation layer 124 is at least one turn, so that double insulation closed loops are formed on the periphery of the electrode assembly 12.

The first insulation layer 123 and the second insulation layer 124 in this application may be made of a same material, or may be made of different materials.

Specifically, a material of the first insulation layer 123 and the second insulation layer 124 may be one or more of polysilsesquioxane modified by aluminum oxide, zirconium oxide, titanium dioxide, magnesium oxide, polymer, and a hydrophilic segment.

Alternatively, a material of the first insulation layer 123 and the second insulation layer 124 may be an oily material, such as a mixture of toluene and one of liquid fluororubber, liquid silicone rubber, liquid polysulfide rubber, and hydroxyl-terminated polybutadiene, or a mixture of water solvent and one of liquid fluororubber, liquid silicone rubber, liquid polysulfide rubber, and hydroxyl-terminated polybutadiene. The mixture is applied on the surface of the first electrode plate 121, and is liquid colloid at room temperature, so that a stable insulation layer is formed on the surface of the first electrode plate 121. After being punctured (for example, pierced by particles, by an external sharp object, or by a deformed housing 11), the insulation layer flows and is cured by heat generated by the electrode assembly 12, thereby forming a stable insulation layer again. Therefore, the first insulation layer 123 or the second insulation layer 124 made of the oily material may have a possibility of re-insulation even when subjected to puncturing, which has good insulation stability. In addition, in a case that a punctured through hole or a groove is formed in the first electrode plate 121, the oily material can also flow into the through hole or the groove, so that an inner wall of the through hole or an inner wall of the groove is coated with the oily material, and the oily material is heated and cured to form an insulation layer at a new coating position, so as to prevent the punctured through hole from being exposed and avoid or delay the short circuit.

According to some embodiments of this application, the inner surface or outer surface of the portion of the first electrode plate 121 exceeding the winding terminating end of the second electrode plate 122 is coated with a flame retardant layer and/or a getter layer (not shown in the figure).

That is, the second insulation layer 124 may be replaced with one of the flame retardant layer and the getter layer, or the second insulation layer 124 is replaced with the flame retardant layer and the getter layer stacked on the inner surface of the first electrode plate 121; or, at least one of the flame retardant layer and the getter layer is stacked and applied on the first insulation layer 123; or, at least one of the flame retardant layer and the getter layer is stacked and applied on the second insulation layer 124.

A material of the flame retardant layer includes one or more of aluminum hydroxide, pseudo-boehmite, boehmite, zirconium hydroxide, magnesium carbonate, basic magnesium carbonate, and calcium carbonate.

When the first electrode plate 121 on the outermost layer comes in contact with the housing 11 and is subjected to abnormal insulation, causing a contact point to be short-circuited, heated, and combusted, under the isolation effect of the flame retardant layer, combustion can be prevented from continuing to develop toward the inside of the electrode assembly 12, so that a combustion degree is reduced, and the safety risk is reduced.

A material of the getter layer may be coenzyme Q10 (coenzyme Q10), that is, quinone 10, a fat-soluble quinone ring compound. In a lithium ion battery, some oxidizing gases, such as oxygen, may be generated due to electrochemical reactions, electrolyte decomposition, or the like. The coenzyme Q10 is capable of transferring the oxidizing gases inside the electrode assembly 12, and reducing by-products generated when the electrode assembly 12 is subjected to an electrochemical reaction into lithium oxide, thereby reducing gases inside the battery, reducing internal pressure, and improving safety.

According to some embodiments of this application, the electrode assembly 12 further includes a separator 125, where the separator 125 is disposed between the first electrode plate 121 and the second electrode plate 122. Still referring to FIG. 15, a winding terminating end of the separator 125 exceeds the winding terminating end of the first electrode plate 121 by at least 1.75 turns.

That is, the winding terminating end of the separator 125 takes the winding terminating end of the first electrode plate 121 as a starting point for continuing to extend and be wound by one turn, and continues to be wound by 0.75 turns or more and then completes winding and is fastened.

The separator 125 between the first electrode plate 121 and the second electrode plate 122 can separate the first electrode plate 121 and the second electrode plate 122 to avoid a short circuit caused by the first electrode plate 121 and the second electrode plate 122 coming in contact with each other. Length of the separator 125 is greater than length of the first electrode plate 121, and the portion of the separator 125 exceeding the winding terminating end of the first electrode plate 121 further tightly wraps the first electrode plate 121 and the second electrode plate 122 to increase the binding force, which prevents the winding terminating end of the first electrode plate 121 from being loosened, and the winding terminating end of the second electrode plate 122 can be better fastened, thereby avoiding an increased gap at a terminating position of the first electrode plate 121 and the second electrode plate 122, so that the lithium precipitation caused by the increased gap between electrode plates is avoided, further avoiding a short circuit of the first electrode plate 121 and the second electrode plate 122 caused by attached lithium crystals puncturing the separator 125, thereby effectively improving the safety.

According to some embodiments of this application, this application further provides a battery cell 1, including a housing 11 and at least one foregoing electrode assembly 12, where the electrode assembly 12 is disposed in the housing 11.

According to some embodiments of this application, this application further provides a battery 100, where the battery 100 includes the foregoing battery cell 1.

According to some embodiments of this application, this application further provides an electric device, where the electric device includes the foregoing battery 100.

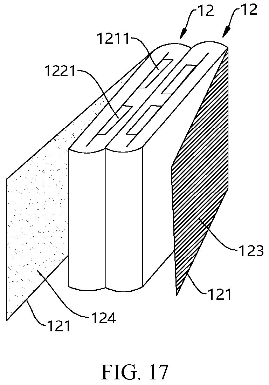

According to some embodiments of this application, referring to FIG. 3 and FIG. 10, this application provides an electrode assembly 12, where the electrode assembly 12 is formed by stacking and winding the first electrode plate 121, the second electrode plate 122, and the separator 125, and after the electrode assembly 12 is wound into a circle, a middle portion of the electrode assembly 12 is pressed tightly to be flat, so that the electrode assembly 12 includes a straight flat zone 12a, a first bending zone 12b, and a second bending zone 12c, where the straight flat zone 12a is located between the first bending zone 12b and the second bending zone 12c. The first electrode plate 121 exceeds the winding terminating end of the second electrode plate 122 by at least half a turn, so that the first electrode plate 121 entirely covers the outer surface of a winding outermost turn of the second electrode plate 122. Both the outermost layer (that is, half a turn by which the first electrode plate 121 exceeds the winding terminating end of the second electrode plate 122) and the second outermost layer (that is, a turn by which the first electrode plate 121 covers the outer surface of an outermost turn of the second electrode plate 122) of the electrode assembly 12 are the first electrode plate 121, and the winding terminating end of the first electrode plate 121 is located in the first bending zone 12b. As shown in FIG. 10, the portion of the first electrode plate 121 exceeding the winding terminating end of the second electrode plate 122 is provided with a first insulation layer 123 and a second insulation layer 124, where the first insulation layer 123 is located on the outer surface of the first electrode plate 121, the first insulation layer 123 extending from the winding terminating end of the first electrode plate 121 by half a turn, and the second insulation layer 124 is located on the inner surface of the first electrode plate 121, the second insulation layer 124 extending from the winding terminating end of the second electrode plate 122 by half a turn, so that the first insulation layer 123 and the second insulation layer 124 both extend from the first vertex to the second vertex and respectively cover one large surface. As shown in FIG. 17, the battery cell 1 provided in this application includes two electrode assemblies 12, where large surfaces of the two electrode assemblies 12 not covered by the first insulation layer 123 and the second insulation layer 124 are in abutting connection or in contact with each other, and large surfaces of the two electrode assemblies 12 covered by the first insulation layer 123 and the second insulation layer 124 are used for facing the housing 11, so that the two electrode assemblies 12 are combined to form double insulation closed loops, thereby achieving a good insulation effect. Further, a flame retardant layer (not shown in the figure) is further stacked on the first insulation layer 123, and a getter layer (not shown in the figure) is stacked on the flame retardant layer. Further, a flame retardant layer (not shown in the figure) is further stacked on the second insulation layer 124, and a getter layer (not shown in the figure) is stacked on the flame retardant layer.

Although this application has been described with reference to the preferred embodiments, various modifications to this application and replacements with equivalents of the components herein can be made without departing from the scope of this application as defined in the claims. This application is not limited to the specific embodiments disclosed in this description, but includes all technical solutions falling within the scope of the claims.

## Claims

1. An electrode assembly (12), comprising a first electrode plate (121), a second electrode plate (122), and a first insulation layer (123), the first electrode plate (121) and the second electrode plate (122) being wound to form the electrode assembly (12), **characterized in that** a winding terminating end of the first electrode plate (121) exceeds a winding terminating end of the second electrode plate (122) by at least half a turn so that the first electrode plate (121) entirely covers an outer surface of an outermost turn of the second electrode plate (122), and the first insulation layer (123) being applied on an outer surface of an outermost turn of the first electrode plate (121).

2. The electrode assembly (12) according to claim 1, wherein the first insulation layer (123) extends from the winding terminating end of the first electrode plate (121) by at least half a turn in a direction opposite to a winding direction of the electrode plates (121, 122).

3. The electrode assembly (12) according to claim 1, wherein the first insulation layer (123) extends from the winding terminating end of the first electrode plate (121) by at least half a turn in a winding direction of the electrode plates (121, 122).

4. The electrode assembly (12) according to claim 2 or 3, wherein the electrode assembly (12) has a straight flat zone (12a), a first bending zone (12b), and a second bending zone (12c), wherein the straight flat zone (12a) is located between the first bending zone (12b) and the second bending zone (12c), and the winding terminating end of the first electrode plate (121) is located in the first bending zone (12b).

5. The electrode assembly (12) according to claim 4, wherein the first bending zone (12b) has a first vertex farthest away from a winding center of the electrode assembly (12), the second bending zone (12c) has a second vertex farthest away from the winding center of the electrode assembly (12), and the first insulation layer (123) covers the first vertex and the second vertex.

6. The electrode assembly (12) according to any one of claims 1 to 5, wherein the first insulation layer (123) extends from the winding terminating end of the first electrode plate (121) and surrounds a periphery of the electrode assembly (12) by one turn.

7. The electrode assembly (12) according to any one of claims 1 to 6, wherein the first insulation layer (123) is applied only on a portion of the first electrode plate (121) exceeding the winding terminating end of the second electrode plate (122).

8. The electrode assembly (12) according to any one of claims 1 to 7, wherein an inner surface of the portion of the first electrode plate (121) exceeding the winding terminating end of the second electrode plate (122) is coated with a second insulation layer (124).

9. The electrode assembly (12) according to any one of claims 1 to 8, wherein the inner surface or an outer surface of the portion of the first electrode plate (121) exceeding the winding terminating end of the second electrode plate (122) is coated with a flame retardant layer and/or a getter layer.

10. The electrode assembly (12) according to any one of claims 1 to 9, wherein the electrode assembly (12) further comprises a separator (125), wherein the separator (125) is disposed between the first electrode plate (121) and the second electrode plate (122), and a winding terminating end of the separator (125) exceeds the winding terminating end of the first electrode plate (121) by at least 1.75 turns.

11. A battery cell (1), comprising a housing (11) and at least one electrode assembly (12) according to any one of claims 1 to 10, wherein the electrode assembly (12) is disposed in the housing (11).

12. A battery (100), comprising the battery cell (1) according to claim 11.

13. An electric device, comprising the battery according to claim 12.

## Patentansprüche

1. Elektrodenanordnung (12), umfassend eine erste Elektrodenplatte (121), eine zweite Elektrodenplatte (122) und eine erste Isolierschicht (123), wobei die erste Elektrodenplatte (121) und die zweite Elektrodenplatte (122) gewickelt sind, um die Elektrodenanordnung (12) zu bilden, **dadurch gekennzeichnet, dass** ein Wickelendende der ersten Elektrodenplatte (121) sich um mindestens eine halbe Windung über ein Wickelendende der zweiten Elektrodenplatte (122) hinaus erstreckt, so dass die erste Elektrodenplatte (121) eine äußere Oberfläche einer äußersten Windung der zweiten Elektrodenplatte (122) gänzlich bedeckt, und die erste Isolierschicht (123) auf eine äußere Oberfläche einer äußersten Windung der ersten Elektrodenplatte (121) aufgebracht ist.

2. Elektrodenanordnung (12) nach Anspruch 1, wobei die erste Isolierschicht (123) sich von dem Wickelendende der ersten Elektrodenplatte (121) um mindestens eine halbe Windung in einer Gegenrichtung zu einer Wickelrichtung der Elektrodenplatten (121, 122) erstreckt.

3. Elektrodenanordnung (12) nach Anspruch 1, wobei die erste Isolierschicht (123) sich von dem Wickelendende der ersten Elektrodenplatte (121) um mindestens eine halbe Windung in einer Wickelrichtung der Elektrodenplatten (121, 122) erstreckt.

4. Elektrodenanordnung (12) nach Anspruch 2 oder 3, wobei die Elektrodenanordnung (12) eine gerade flache Zone (12a), eine erste Biegezone (12b) und eine zweite Biegezone (12c) aufweist, wobei die gerade flache Zone (12a) sich zwischen der ersten Biegezone (12b) und der zweiten Biegezone (12c) befindet, und das Wickelendende der ersten Elektrodenplatte (121) sich in der ersten Biegezone (12b) befindet.

5. Elektrodenanordnung (12) nach Anspruch 4, wobei die erste Biegezone (12b) einen ersten Scheitelpunkt aufweist, der am weitesten von einem Wicklungszentrum der Elektrodenanordnung (12) entfernt ist, die zweite Biegezone (12c) einen zweiten Scheitelpunkt aufweist, der am weitesten von dem Wicklungszentrum der Elektrodenanordnung (12) entfernt ist, und die erste Isolierschicht (123) den ersten Scheitelpunkt und den zweiten Scheitelpunkt bedeckt.

6. Elektrodenanordnung (12) nach einem der Ansprüche 1 bis 5, wobei die erste Isolierschicht (123) sich von dem Wickelendende der ersten Elektrodenplatte (121) erstreckt und einen Umfang der Elektrodenanordnung (12) mit einer Windung umgibt.

7. Elektrodenanordnung (12) nach einem der Ansprüche 1 bis 6, wobei die erste Isolierschicht (123) nur auf einen Abschnitt der ersten Elektrodenplatte (121) aufgebracht ist, der sich über das Wickelendende der zweiten Elektrodenplatte (122) hinaus erstreckt.

8. Elektrodenanordnung (12) nach einem der Ansprüche 1 bis 7, wobei eine innere Oberfläche des Abschnitts der ersten Elektrodenplatte (121), der sich über das Wickelendende der zweiten Elektrodenplatte (122) hinaus erstreckt, mit einer zweiten Isolierschicht (124) beschichtet ist.

9. Elektrodenanordnung (12) nach einem der Ansprüche 1 bis 8, wobei die innere Oberfläche oder eine äußere Oberfläche des Abschnitts der ersten Elektrodenplatte (121), der sich über das Wickelendende der zweiten Elektrodenplatte (122) hinaus erstreckt, mit einer flammhemmenden Schicht oder einer Getterschicht beschichtet ist.

10. Elektrodenanordnung (12) nach einem der Ansprüche 1 bis 9, wobei die Elektrodenanordnung (12) des Weiteren einen Separator (125) umfasst, wobei der Separator (125) zwischen der ersten Elektrodenplatte (121) und der zweiten Elektrodenplatte (122) angeordnet ist, und ein Wickelendende des Separators (125) sich um mindestens 1,75 Windungen über das Wickelendende der ersten Elektrodenplatte (121) hinaus erstreckt.

11. Batteriezelle (1), umfassend ein Gehäuse (11) und mindestens eine Elektrodenanordnung (12) nach einem der Ansprüche 1 bis 10, wobei die Elektrodenanordnung (12) in dem Gehäuse (11) angeordnet ist.

12. Batterie (100), umfassend die Batteriezelle (1) nach Anspruch 11.

13. Elektrische Vorrichtung, umfassend die Batterie nach Anspruch 12.

## Revendications

1. Ensemble électrode (12), comprenant une première plaque d'électrode (121), une deuxième plaque d'électrode (122) et une première couche d'isolation (123), la première plaque d'électrode (121) et la deuxième plaque d'électrode (122) étant enroulées pour former l'ensemble électrode (12), **caractérisé en ce qu'**une extrémité de terminaison d'enroulement de la première plaque d'électrode (121) dépasse une extrémité de terminaison d'enroulement de la deuxième plaque d'électrode (122) d'au moins la moitié d'un tour, de sorte que la première plaque d'électrode (121) recouvre entièrement une surface externe d'un tour le plus extérieur de la deuxième plaque d'électrode (122), et la première couche d'isolation (123) étant appliquée sur une surface externe d'un tour le plus extérieur de la première plaque d'électrode (121).

2. Ensemble électrode (12) selon la revendication 1, dans lequel la première couche d'isolation (123) s'étend depuis l'extrémité de terminaison d'enroulement de la première plaque d'électrode (121) sur au moins la moitié d'un tour dans une direction opposée à une direction d'enroulement des plaques d'électrode (121, 122).

3. Ensemble électrode (12) selon la revendication 1, dans lequel la première couche d'isolation (123) s'étend depuis l'extrémité de terminaison d'enroulement de la première plaque d'électrode (121) sur au moins la moitié d'un tour dans une direction d'enroulement des plaques d'électrode (121, 122).

4. Ensemble électrode (12) selon la revendication 2 ou 3, l'ensemble électrode (12) comportant une zone plate rectiligne (12a), une première zone de cintrage (12b) et une deuxième zone de cintrage (12c), la zone plate rectiligne (12a) se situant entre la première zone de cintrage (12b) et la deuxième zone de cintrage (12c), et l'extrémité de terminaison d'enroulement de la première plaque d'électrode (121) se situant dans la première zone de cintrage (12b).

5. Ensemble électrode (12) selon la revendication 4, dans lequel la première zone de cintrage (12b) comporte un premier sommet le plus éloigné d'un centre d'enroulement de l'ensemble électrode (12), la deuxième zone de cintrage (12c) comporte un deuxième sommet le plus éloigné du centre d'enroulement de l'ensemble électrode (12), et la première couche d'isolation (123) recouvre le premier sommet et le deuxième sommet.

6. Ensemble électrode (12) selon l'une quelconque des revendications 1 à 5, dans lequel la première couche d'isolation (123) s'étend depuis l'extrémité de terminaison d'enroulement de la première plaque d'électrode (121) et entoure une périphérie de l'ensemble électrode (12) d'un tour.

7. Ensemble électrode (12) selon l'une quelconque des revendications 1 à 6, dans lequel la première couche d'isolation (123) n'est appliquée que sur une portion de la première plaque d'électrode (121) dépassant l'extrémité de terminaison d'enroulement de la deuxième plaque d'électrode (122).

8. Ensemble électrode (12) selon l'une quelconque des revendications 1 à 7, dans lequel une surface interne de la portion de la première plaque d'électrode (121) dépassant l'extrémité de terminaison d'enroulement de la deuxième plaque d'électrode (122) est revêtue d'une deuxième couche d'isolation (124).

9. Ensemble électrode (12) selon l'une quelconque des revendications 1 à 8, dans lequel la surface interne ou une surface externe de la portion de la première plaque d'électrode (121) dépassant l'extrémité de terminaison d'enroulement de la deuxième plaque d'électrode (122) est revêtue d'une couche d'ignifugeant et/ou d'une couche d'absorbeur.

10. Ensemble électrode (12) selon l'une quelconque des revendications 1 à 9, l'ensemble électrode (12) comprenant en outre un séparateur (125), le séparateur (125) étant disposé entre la première plaque d'électrode (121) et la deuxième plaque d'électrode (122), et une extrémité de terminaison d'enroulement du séparateur (125) dépassant l'extrémité de terminaison d'enroulement de la première plaque d'électrode (121) d'au moins 1,75 tour.

11. Cellule de batterie (1), comprenant un boîtier (11) et au moins un ensemble électrode (12) selon l'une quelconque des revendications 1 à 10, l'ensemble électrode (12) étant disposé dans le boîtier (11).

12. Batterie (100), comprenant la cellule de batterie (1) selon la revendication 11.

13. Dispositif électrique, comprenant la batterie selon la revendication 12.
